(19) Europäisches Patentamt / European Patent Office / Office européen des brevets

(11) **EP 2 249 580 B1**

(12) **EUROPÄISCHE PATENTSCHRIFT**

(45) Veröffentlichungstag und Bekanntmachung des Hinweises auf die Patenterteilung:
**04.09.2019 Patentblatt 2019/36**

(51) Int Cl.:
*G06T 7/80 (2017.01)*    *H04N 17/00 (2006.01)*

(21) Anmeldenummer: **09450093.1**

(22) Anmeldetag: **05.05.2009**

(54) **VERFAHREN ZUR KALIBRIERUNG DES BILDES EINER KAMERA**

METHOD FOR CALIBRATING THE IMAGE OF A CAMERA

PROCÉDÉ DE CALIBRAGE DE L'IMAGE D'UNE CAMÉRA

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(43) Veröffentlichungstag der Anmeldung:
**10.11.2010 Patentblatt 2010/45**

(73) Patentinhaber: **Kapsch TrafficCom AG**
**1120 Wien (AT)**

(72) Erfinder:
- **KAHLER, Peter**
  **1150 Wien (AT)**
- **JANNER, Christian**
  **1210 Wien (AT)**
- **LÖHNDORF, Maike**
  **1160 Wien (AT)**

(74) Vertreter: **Weiser, Andreas**
**Patentanwalt**
**Kopfgasse 7**
**1130 Wien (AT)**

(56) Entgegenhaltungen:
DE-A1-102005 061 931    DE-A1-102007 021 107
US-A1- 2007 239 169

- **BAKER H H; BOLLES R C; MARIMONT D H: "DETERMINING SCENE STRUCTURE FROM A MOVING CAMERA: EPIPOLAR-PLANE IMAGE ANALYSIS" TOPICAL MEETING ON MACHINE VISION, XX, XX, 1. Januar 1987 (1987-01-01), Seiten 14-17, XP000572537**

- **DAILEY D J; SCHOEPFLIN T N: "Dynamic camera calibration of roadside traffic management cameras for vehicle speed estimation" IEEE TRANSACTIONS ON INTELLIGENT TRANSPORTATION SYSTEMS, IEEE SERVICE CENTER, PISCATAWAY, NJ, US, Bd. 4, Nr. 2, 1. Juni 2003 (2003-06-01), Seiten 90-98, XP011104438 ISSN: 1524-9050**

- **HEIKKILA J: "Geometric Camera Calibration Using Circular Control Points" IEEE TRANSACTIONS ON PATTERN ANALYSIS AND MACHINE INTELLIGENCE, IEEE SERVICE CENTER, LOS ALAMITOS, CA, US, Bd. 22, Nr. 10, 1. Oktober 2000 (2000-10-01), Seiten 1066-1077, XP002476596 ISSN: 0162-8828**

- **HEIKKILA J ET AL: "A four-step camera calibration procedure with implicit image correction", COMPUTER VISION AND PATTERN RECOGNITION, 1997. PROCEEDINGS., 1997 IEEE COMPUTER SOCIETY CONFERENCE ON SAN JUAN, PUERTO RICO 17-19 JUNE 1997, LOS ALAMITOS, CA, USA,IEEE COMPUT. SOC, US, 17 June 1997 (1997-06-17), pages 1106-1112, XP010237491, DOI: 10.1109/CVPR.1997.609468 ISBN: 978-0-8186-7822-6**

- **TRIGGS B: "Camera pose and calibration from 4 or 5 known 3D points", COMPUTER VISION, 1999. THE PROCEEDINGS OF THE SEVENTH IEEE INTERNATION AL CONFERENCE ON KERKYRA, GREECE 20-27 SEPT. 1999, LOS ALAMITOS, CA, USA,IEEE COMPUT. SOC, US, vol. 1, 20 September 1999 (1999-09-20), pages 278-284, XP010350409, ISBN: 978-0-7695-0164-2**

- HEIKKILA J ET AL: "Calibration procedure for short focal length off-the-shelf CCD cameras", PROCEEDINGS OF THE INTERNATIONAL CONFERENCE ON PATTERNRECOGNITION, XX, XX, vol. 1, 1 January 1996 (1996-01-01), pages 166-170, XP002350077, DOI: 10.1109/ICPR.1996.546012
- HATZE ET AL: "High-precision three-dimensional photogrammetric calibration and object space reconstruction using a modified DLT-approach", JOURNAL OF BIOMECHANICS, PERGAMON PRESS, NEW YORK, NY, US, vol. 21, no. 7, 1 January 1988 (1988-01-01), pages 533-538, XP026271800, ISSN: 0021-9290, DOI: 10.1016/0021-9290(88)90216-3 [retrieved on 1988-01-01]
- R. N. Hinrichs et al.: "NLT and extrapolated DLT: 3-D cinematography alternatives for enlarging the volume of calibration", Journal of Biomechanics, vol. 28, no. 10 October 1995 (1995-10), pages 1219-1223, Retrieved from the Internet: URL:http://www.sciencedirect.com/science/article/pii/002192909500034F [retrieved on 2013-02-21]
- WOOD G A ET AL: "The accuracy of DLT extrapolation in three-dimensional film analysis", JOURNAL OF BIOMECHANICS, PERGAMON PRESS, NEW YORK, NY, US, vol. 19, no. 9, 1 January 1986 (1986-01-01), pages 781-783,785, XP026455501, ISSN: 0021-9290 [retrieved on 1986-01-01]
- BAKER H H ET AL: "DETERMINING SCENE STRUCTURE FROM A MOVING CAMERA: EPIPOLAR-PLANE IMAGE ANALYSIS", TOPICAL MEETING ON MACHINE VISION, XX, XX, 1 January 1987 (1987-01-01), pages 14-17, XP000572537,

**Beschreibung**

Die vorliegende Erfindung betrifft ein Verfahren zur Kalibrierung des Bildes einer Kamera, insbesondere Verkehrsüberwachungskamera, in Bezug auf ihren Blickraum, indem die Kameraprojektionsparameter einer Projektion des Blickraums auf das Bild ermittelt werden.

Kameraprojektionen können auf verschiedenste Arten modelliert werden, z.B. als Lochkameramodell, "Thick-Lens"- oder "Thin-Lens"-Modell, Fischaugen-Modell usw., mit und ohne Berücksichtigung von Linsenfehlern und -verzerrungen. Allen Modellen ist gemeinsam, daß die Projektion durch sog. Kameraprojektionsparameter, welche z.B. in vereinfachten Modellen direkt die Koeffizienten einer geometrischen Projektionsmatrix bilden, beschrieben werden kann.

Die Verwendung einer direkten linearen Transformation (DLT) zur Ermittlung von Kameraprojektionsparametern ist seit langem bekannt, siehe beispielsweise in Abdel-Aziz, Y.I., und Karara, H.M.: "Direct Linear Transformation from Comparator Coordinates into Object Space Coordinates in Close-range Photogrammetry", Proceedings of the Symposium on Close-Range Photogrammetry, Seiten 1 - 18, 1971, Falls Church, Virginia, American Society of Photogrammetry. Zwei auf der bekannten direkten linearen Transformation (DLT) basierende Kalibrierungsverfahren sind in Hatze, H.: "High-precision three-dimensional photogrametric calibration and object space reconstruction using a modified DLT-approach", Journal of Biomechanics, Pergamon Press, New York, NY, US, Bd. 21, Nr. 7, 1. Januar 1988, Seiten 533-538, ISSN: 0021-9290, beschrieben.

Für die Anwendung der DLT zur Bestimmung der Kameraprojektionsparameter ist die Kenntnis von mindestens sechs raumaufspannenden Punkten im Blickraum, sog. "Weltpunkten", und deren Zuordnung zu Bildpunkten im Kamerabild erforderlich. Dazu müssen nach dem derzeitigen Stand der Technik zumindest sechs Markierungen im gesamten Blickraum der Kamera verteilt angebracht, vermessen und anschließend den richtigen Bildpunkten im Kamerabild zugeordnet werden.

Bei Verkehrsüberwachungskameras für Straßentunnels oder Autobahnen, welche ein großes Blickfeld von bis zu mehreren hundert Metern haben können, bedeutet dies einen hohen Zeitaufwand, weil die einzelnen Markierungen z.B. händisch auf der Straße angebracht und mittels Laserentfernungsmessern oder Maßbändern zueinander vermessen werden müssen. In der Regel ist dazu auch ein Absperren des Tunnels bzw. des Straßenzuges erforderlich, was äußerst hinderlich ist: Gerade bei Tunnelkameras ist eine häufige Neukalibrierung der Überwachungskameras erforderlich, weil sich diese beim regelmäßigen Waschen des Tunnels oder durch Kollisionen anfahrender Lastfahrzeuge verstellen können. Auch bei jeder Reparatur oder Wartung einer Kamera muß diese neu kalibriert werden.

Die Erfindung setzt sich zum Ziel, ein Verfahren zur Kalibrierung von Kamerabildern zu schaffen, welches einfacher und rascher durchführbar ist als die bisher bekannten Verfahren. Dieses Ziel wird mit einem Verfahren der einleitend genannten Art erreicht, das sich auszeichnet durch die Schritte des Anspruchs 1.

Mit Hilfe des erfindungsgemäßen Verfahrens ist es nicht mehr erforderlich, die für die Ermittlung der Kameraprojektionsparameter benötigten mindestens sechs Markierungen im Blickraum händisch anzubringen und auszumessen. Es wird stattdessen ein beweglicher Träger, z.B. ein Fahrzeug, mit vorvermessenen Markierungen eingesetzt, welcher über das Blickfeld bewegt wird. Dabei ist es nicht einmal erforderlich, das Ausmaß der Bewegung in der Realwelt zu kennen, sodaß beispielsweise Geschwindigkeit und Fahrtrichtung des Trägers weitgehend beliebig gewählt werden können.

Die so ermittelten Kameraprojektionsparameter ermöglichen anschließend eine Rück-Zuordnung des Bildkoordinatensystems des Kamerabildes zu einer beliebig gewählten Ebene im Weltkoordinatensystem des Blickraums, z.B. zu einer Straßenebene, wodurch das Ziel der Kalibrierung erreicht ist. Aus dem derart kalibrierten Kamerabild können später weitere Informationen abgeleitet werden, beispielsweise Geschwindigkeit und Fahrtrichtung eines Fahrzeugs auf einer Straße im Bild. Im vorgeschlagenen Verfahren erfolgt das genannte Ermitteln in einem Matrixmodell mit Hilfe der Methode der Direkten Linearen Transformation ("DLT"), insbesondere bevorzugt durch Lösen der DLT-Gleichung

$$D(s,t) \cdot m = p$$

hinsichtlich *m, s* und *t,* mit

*D(s,t)*    DLT-Matrix aller Welt- und Bildpunkte, in welcher die zweiten Weltpunkte durch die um den Versatz (s, t, 0) verschobenen ersten Weltpunkte ausgedrückt sind,
*m*    Vektor der Kameraprojektionsparameter, und
*p*    Vektor aller Bildpunkte.

Diese Ausführungsform ist speziell für Verkehrsüberwachungskameras geeignet, die eine Straßenebene beobachten, auf welcher der Träger um einen zweidimensionalen Versatz verschoben wird, sodaß die dritte Koordinate des Versatzes als Null angenommen werden kann.

Gemäß einer besonders vorteilhaften Ausführungsform der Erfindung wird zum Lösen der DLT-Gleichung die Minimierungsaufgabe

$$\|D(s,t) \cdot m - p\| \to \min$$

mittels des Gauß-Newton-Verfahrens gelöst. Das Gauß-Newton-Verfahren ist in der Mathematik bekannt, sodaß hier nicht weiter darauf eingegangen zu werden braucht. Der Einsatz des Gauß-Newton-Verfahrens ermöglicht eine rasche Lösung der DLT-Gleichung mit hinreichender Genauigkeit.

Für die grundlegende Funktionsweise des Verfahrens ist es nicht unbedingt erforderlich, daß alle Markierungen in jedem Bild detektiert werden, es genügt, daß zumindest vier Markierungen im einen und zumindest drei Markierungen im anderen Bild detektiert werden. Aus diesen 7 Bildpunkten lassen sich 14 Gleichungen erstellen, mit welchen sich die 11 Kameraprojektionsparameter eines einfachen Lochkameraprojektionsmodells und bis zu 3 Koordinaten des Versatzes bestimmen lassen.

In jedem Fall ist es besonders günstig, wenn als Träger ein Fahrzeug und als Versatz eine Fahrstrecke des Fahrzeugs verwendet wird. Das erfindungsgemäße Verfahren eignet sich damit besonders zur Kalibrierung der Bilder von Verkehrsüberwachungskameras, insbesondere Tunnel- und Autobahnkameras. Das Verfahren der Erfindung kann während der Betriebszeiten des Tunnels bzw. der Straße durchgeführt werden und erfordert keinerlei Vermessungs- oder Absperrmaßnahmen an dem Straßenzug.

Bevorzugt werden als Markierungen markante Punkte des Fahrzeugs gewählt oder insbesondere Leuchtmittel auf einem Heckträger sowie einem Dach- oder Rückspiegelträger des Fahrzeugs angebracht, sodaß herkömmliche Fahrzeuge dafür entsprechend umgerüstet werden können.

Besonders vorteilhaft ist es, wenn gemäß einem weiteren Merkmal der Erfindung mehr als zwei Bilder aufgenommen werden, um weitere Bildpunkte der Markierungen zu detektieren, welche in die Ermittlung der Kameraprojektionsparameter einbezogen werden, wodurch die Genauigkeit des Verfahrens erhöht werden kann.

Eine weitere Ausführungsform des Verfahrens der Erfindung zeichnet sich dadurch aus, daß es wiederholt durchgeführt und die jeweils ermittelten Kameraprojektionsparameter gemittelt werden, wodurch die Genauigkeit noch weiter verbessert werden kann.

Die Erfindung wird nachstehend anhand eines in den beigeschlossenen Zeichnungen dargestellten Ausführungsbeispieles näher erläutert. In den Zeichnungen zeigt

Fig. 1 das Verfahren der Erfindung anhand zweier Stellungen eines als Markierungsträger dienenden Fahrzeugs auf einer Straße, und

die Fig. 2a und 2b die zu den beiden Stellungen des Fahrzeugs gehörenden Bilder der Verkehrsüberwachungskamera von Fig. 1.

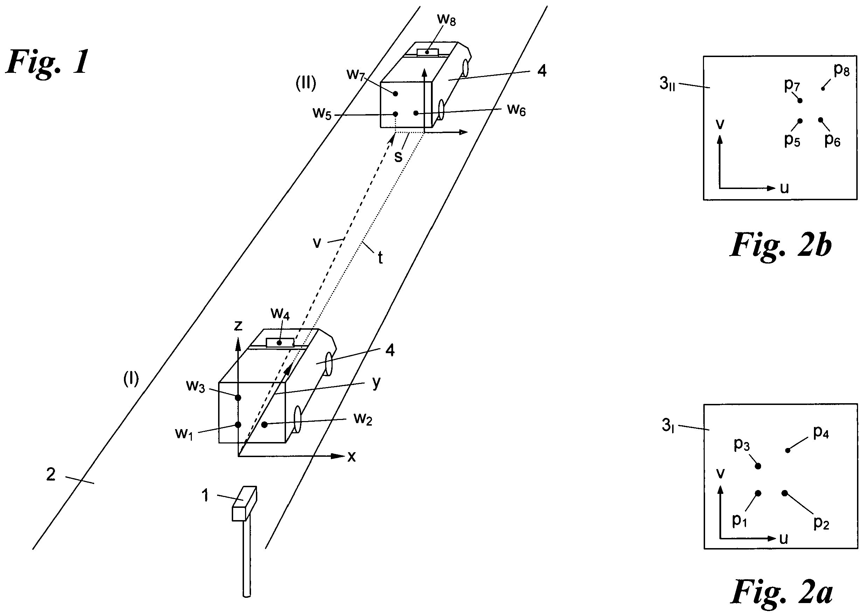

Fig. 1 zeigt eine Kamera 1, in deren Blickraum eine Straße 2 liegt, von welcher die Kamera 1 zumindest zwei Bilder $3_I$, $3_{II}$ (Fig. 2a, 2b) in einem zeitlichen Abstand aufnimmt. Beispielsweise ist die Kamera 1 eine Videokamera mit einer Bildwiederholungsrate von z.B. 25 fps (frames per second).

Den realen Objekten (Weltpunkten) im Blickraum der Kamera 1 ist ein Weltkoordinatensystem (x, y, z) zugeordnet, und den Bildpunkten (Pixeln) der zweidimensionalen Kamerabilder $3_I$, $3_{II}$ ein Bildkoordinatensystem u, v.

Die Objekte im Blickraum können an sich beliebiger Art sein; beispielhafte Anwendungen sind der Einsatz einer Kamera 1 zur Überwachung von Wasserwegen, öffentlichen Plätzen, Fußgängerzonen, Flughäfen, Rollfeldern, Parkräumen, Gebäuden, Eingangs- und Wartebereichen, usw.

Wie dem Fachmann bekannt, kann die geometrische projektive Abbildung von Weltpunkten $w_i$ mit den Koordinaten $(x_i, y_i, z_i)$, z.B. der gezeigten Weltpunkte $w_1$, $w_2$,... $w_8$, auf Bildpunkte $p_i$ mit den Koordinaten $(u_i, v_i)$, z.B. der gezeigten Bildpunkte $p_1$, $p_2$,... $p_8$, z.B. als perspektivisches Lochkameramodell modelliert werden zu:

$$\begin{pmatrix} \sigma u_i \\ \sigma v_i \\ \sigma \end{pmatrix} = \begin{pmatrix} m_{11} & m_{12} & m_{13} & m_{14} \\ m_{21} & m_{22} & m_{23} & m_{24} \\ m_{31} & m_{32} & m_{33} & 1 \end{pmatrix} \cdot \begin{pmatrix} x_i \\ y_i \\ z_i \\ 1 \end{pmatrix} \qquad (1)$$

oder kurz

$$p_i = M \cdot w_i \qquad\qquad (2)$$

Die Matrix M wird auch als Kameraprojektionsmatrix des gewählten Kameramodells und ihre Koeffizienten $m_{kl}$ werden auch als Kameraprojektionsparameter bezeichnet. Werden andere Kameramodelle als das hier im Detail beschriebene Lochkameramodell verwendet, z.B. "Thick-Lens"-, "Thin-Lens"-, Fischaugen- oder andere Kameramodelle, mit und ohne Berücksichtigung von Linsenfehlern und -verzerrungen, dann kann die Kameraprojektion auch durch mehr und/oder andere, nicht notwendigerweise nur eine solche Matrix bildende Kameraprojektionsparameter modelliert werden.

Wenn die genaue Position der Kamera 1 und alle ihre internen Parameter wie Brennweite, Sensorgröße usw. bekannt wären, könnte man die Parameter der Kameraprojektion, hier die Matrix M, direkt konstruieren. Das Ziel der Kamerakalibrierung ist es, die Kameraprojektionsparameter, hier die Matrix M, ohne dieses Wissen zu bestimmen. Im vorliegenden Beispiel sind also die 11 Koeffizienten $m_{11}$, $m_{12}$,... $m_{33}$ zu ermitteln.

Unter der Annahme, daß zumindest sechs Zuordnungen von Weltpunkten $w_i$ zu Bildpunkten $p_i$ bekannt sind, können die 11 Kameraprojektionsparameter $m_{11}$, $m_{12}$... $m_{33}$ der Matrix M als Parameter einer Direkten Linearen Transformation (DLT) gemäß der folgenden DLT-Gleichung (hier für acht Zuordnungen aufgestellt; der Zweck hiefür wird später noch ersichtlich werden) ermittelt werden:

$$
\begin{pmatrix}
x_1 & y_1 & z_1 & 1 & 0 & 0 & 0 & 0 & -u_1 x_1 & -u_1 y_1 & -u_1 z_1 \\
0 & 0 & 0 & 0 & x_1 & y_1 & z_1 & 1 & -v_1 x_1 & -v_1 y_1 & -v_1 z_1 \\
x_2 & y_2 & z_2 & 1 & 0 & 0 & 0 & 0 & -u_2 x_2 & -u_2 y_2 & -u_2 z_2 \\
0 & 0 & 0 & 0 & x_2 & y_2 & z_2 & 1 & -v_2 x_2 & -v_2 y_2 & -v_2 z_2 \\
\vdots & \vdots & \vdots & \vdots & \vdots & \vdots & \vdots & \vdots & \vdots & \vdots & \vdots \\
x_8 & y_8 & z_8 & 1 & 0 & 0 & 0 & 0 & -u_8 x_8 & -u_8 y_8 & -u_8 z_8 \\
0 & 0 & 0 & 0 & x_8 & y_8 & z_8 & 1 & -v_8 x_8 & -v_8 y_8 & -v_8 z_8
\end{pmatrix}
\cdot
\begin{pmatrix}
m_{11} \\ m_{12} \\ m_{13} \\ m_{14} \\ m_{21} \\ \vdots \\ m_{33}
\end{pmatrix}
=
\begin{pmatrix}
u_1 \\ v_1 \\ u_2 \\ v_2 \\ \vdots \\ u_8 \\ v_8
\end{pmatrix}
\qquad (3)
$$

oder kurz

$$D \cdot m = p \qquad\qquad (4)$$

In einem ersten Schritt wird nun ein bewegbarer Träger 4 im Blickraum der Kamera 1, im gezeigten Beispiel ein Fahrzeug, mit zumindest vier von der Kamera 1 erblickbaren Markierungen bzw. ersten Weltpunkten $w_1$, $w_2$, $w_3$, $w_4$ versehen. Die Weltpunkte $w_1$, $w_2$, $w_3$, $w_4$ werden so gewählt, daß sie ein Volumen aufspannen und ihre Lage im Weltkoordinatensystem x, y, z bekannt ist.

In einer ersten Stellung I des Trägers 4 nimmt die Kamera 1 ein erstes Bild $3_I$ auf. In dem Bild $3_I$ werden, sofort oder später, manuell oder mit Hilfe herkömmlicher Bilderkennungsverfahren, die Bildpunkte $p_1$, $p_2$, $p_3$, $p_4$ der vier Markierungen bzw. Weltpunkte $w_1$, $w_2$, $w_3$, $w_4$ detektiert.

Anschließend wird der Träger 4 um einen Versatz v(s,t,0) im Blickraum der Kamera 1 verschoben, z.B. das Fahrzeug um eine Fahrstrecke vorwärtsbewegt. In dieser zweiten Stellung II wird wieder ein Bild $3_{II}$ aufgenommen und darin werden die neuen Bildpunkte $p_5$, $p_6$, $p_7$, $p_8$ der zu den neuen Weltpunkten $w_5$, $w_6$, $w_7$, $w_8$ verschobenen ursprünglichen Markierungen bzw. Weltpunkte $w_1$, $w_2$, $w_3$, $w_4$ detektiert.

Zur Lösung der Gleichung (3) können daher die neuen bzw. zweiten Weltpunkte $w_5$, $w_6$, $w_7$, $w_8$ durch den Versatz v(s,t,0) der alten bzw. ersten vier Weltpunkte $w_1$, $w_2$, $w_3$, $w_4$ ausgedrückt als:

$$(x_5, y_5, z_5) = (x_1 + s, y_1 + t, z_1) \qquad (5)$$

$$(x_6, y_6, z_6) = (x_2 + s, y_2 + t, z_2) \qquad (6)$$

$$(x_7, y_7, z_7) = (x_3 + s, y_3 + t, z_3) \qquad (7)$$

$$(x_8, y_8, z_8) = (x_4 + s, y_4 + t, z_4) \qquad (8)$$

Wie ersichtlich, wurde im gezeigten Beispiel ein Versatz v parallel zur x/y-Ebene des gewählten Weltkoordinatensystems angenommen, unter der Annahme, daß der Träger 4 ein Fahrzeug ist, welches sich in konstantem z-Abstand zur Ebene der Straße 2 bewegt und das Weltkoordinatensystem x, y, z entsprechend festgelegt wurde. Falls gewünscht, könnte jedoch auch ein dreidimensionaler Versatz v verwendet werden.

In Gleichung (3) bzw. (4) können daher in den letzten acht Zeilen der Matrix D die Weltpunkte $w_5$, $w_6$, $w_7$, $w_8$ durch die Weltpunkte $w_1$, $w_2$, $w_3$, $w_4$ und die Versatzparameter s, t ausgedrückt werden, und wir nennen diese modifizierte Matrix D(s, t).

Die Gleichung (3) bzw. (4) besitzt nunmehr 13 Unbekannte: 11 Kameraprojektionsparameter $m_{kl}$ der Kameraprojektionsmatrix M und 2 Versatzparamter s, t. Die DLT-Gleichung (3) bzw. (4) wird damit zur neuen DLT-Gleichung

$$D(s,t) \cdot m = p \qquad (9)$$

Die Gleichung (9) kann anschließend als Minimierungsaufgabe der Form

$$\|D(s,t)m - p\| \to \min \qquad (10)$$

gelöst werden. In der Minimierungsaufgabe suchen wir $m_{11}$, $m_{12}$,... $m_{33}$ sowie s und t so, daß die Norm $\|D(s,t)m\text{-}p\|$ minimal wird.

Dazu eignet sich grundsätzlich jedes in der Technik bekannte Verfahren; bevorzugt wird die Minimierungsaufgabe (10) mit Hilfe des Gauß-Newton-Verfahrens gelöst.

Im Ergebnis werden auf diese Weise - unter gleichzeitiger Mitermittlung des Versatzes v - die Kameraprojektionsparameter $m_{kl}$ der Kameraprojektionsmatrix des Lochkameramodells Gleichung (1) ermittelt. In weiterer Folge läßt sich damit jeder beliebige Weltpunkt einem Bildpunkt zuordnen, oder umgekehrt jeder Bildpunkt einem Weltpunkt in einer ausgewählten Ebene des Blickraums, z.B. einem Punkt auf der Straße 2. Dadurch können beispielsweise der Ort und die Geschwindigkeit von Fahrzeugen 4 auf der Straße 2 aus den Kamerabildern $3_I$, $3_{II}$ vermessen werden.

Da die DLT-Gleichung (9) bzw. Minimierungsaufgabe (10) lediglich 13 (soferne ein zweidimensionaler Versatz v angenommen wird) oder 14 Unbekannte (wenn ein dreidimensionaler Versatz v angenommen wird) hat, genügen an sich sieben Weltpunkt-zu-Bildpunkt-Zuordnungen $w_i \leftrightarrow p_i$ zur Lösung. Im einfachsten Fall könnten daher in einem Bild vier und im anderen Bild auch nur drei Bildpunkte detektiert werden; jede weitere Erhöhung der Anzahl der detektierter Zuordnungen $w_i \leftrightarrow p_i$, z.B. durch Heranziehung weiterer Kamerabilder für mehr als zwei Stellungen I, II des Trägers 4 und/oder durch Verwendung von mehr als vier Markierungen auf dem Träger 4, kann zur Verbesserung der Genauigkeit der Lösung herangezogen werden. Auch ist es möglich, das Verfahren zu wiederholen, um die in den einzelnen Durchläufen ermittelten Kameraprojektionsparameter durch Mittelung zu stabilisieren.

Die Erfindung ist nicht auf die dargestellte Ausführungsform beschränkt, sondern umfaßt alle Varianten und Modifikationen, die in den Rahmen der angeschlossenen Ansprüche fallen.

**Patentansprüche**

1.   Verfahren zur Kalibrierung des Bildes ($3_I$, $3_{II}$) einer Kamera (1), insbesondere Verkehrsüberwachungskamera, in Bezug auf ihren Blickraum, indem die Kameraprojektionsparameter ($m_{kl}$) einer Kameraprojektion des Blickraums auf das Bild ermittelt werden, **gekennzeichnet durch** die Schritte

Bereitstellen eines bewegbaren Trägers (4) mit zumindest vier von der Kamera (1) erblickbaren Markierungen, die ein Volumen aufspannen und bekannte erste Weltpunkte ($w_i$) im Blickraum bilden,

Aufnehmen eines ersten Bildes ($3_I$) des Blickraums, Verschieben des Trägers (4) im Blickraum um einen unbekannten Versatz (v), um von diesem abhängige zweite Weltpunkte ($w_i$) im Blickraum zu erhalten,

Aufnehmen eines zweiten Bildes ($3_{II}$) des Blickraums, Detektieren der Markierungen im ersten Bild ($3_I$) als erste Bildpunkte ($p_i$) und im zweiten Bild ($3_{II}$) als zweite Bildpunkte ($p_i$), und

Ermitteln der Kameraprojektionsparameter ($m_{kl}$), unter Mitermittlung des Versatzes, aus den bekannten ersten Weltpunkten, den vom Versatz abhängigen zweiten Weltpunkten, den detektierten ersten Bildpunkten und den detektierten zweiten Bildpunkten mit Hilfe der Methode der Direkten Linearen Transformation ("DLT").

2. Verfahren nach Anspruch 1, **dadurch gekennzeichnet, daß** das Ermitteln durch Lösen der DLT-Gleichung

$$D(s,t) \cdot m = p$$

hinsichtlich *m, s* und *t* erfolgt, mit

> *D(s,t)* DLT-Matrix aller Welt- und Bildpunkte, in welcher die zweiten Weltpunkte durch die um den Versatz (s,t,0) verschobenen ersten Weltpunkte ausgedrückt sind,
> *m* Vektor der Kameraprojektionsparameter, und
> *p* Vektor aller Bildpunkte.

3. Verfahren nach Anspruch 2, **dadurch gekennzeichnet, daß** zum Lösen der DLT-Gleichung die Minimierungsaufgabe

$$\left\| D(s,t) \cdot m - p \right\| \to \min$$

mittels des Gauß-Newton-Verfahrens gelöst wird.

4. Verfahren nach einem der Ansprüche 1 bis 3, **dadurch gekennzeichnet, daß** zumindest vier Markierungen im einen und zumindest drei Markierungen im anderen Bild detektiert werden.

5. Verfahren nach einem der Ansprüche 1 bis 4, **dadurch gekennzeichnet, daß** mehr als zwei Bilder ($3_I$, $3_{II}$) aufgenommen werden, um weitere Bildpunkte ($p_i$) der Markierungen ($w_i$) zu detektieren, welche in die Ermittlung der Kameraprojektionsparameter ($m_{kl}$) einbezogen werden.

6. Verfahren nach einem der Ansprüche 1 bis 5, **dadurch gekennzeichnet, daß** als Träger (4) ein Fahrzeug und als Versatz (v) eine Fahrstrecke des Fahrzeugs (4) verwendet wird.

7. Verfahren nach Anspruch 6, **dadurch gekennzeichnet, daß** als Markierungen markante Punkte des Fahrzeugs (4) verwendet werden.

8. Verfahren nach Anspruch 6, **dadurch gekennzeichnet, daß** als Markierungen ($w_i$) Leuchtmittel auf einem Heckträger sowie einem Dach- oder Rückspiegelträger des Fahrzeugs (4) angebracht werden.

9. Verfahren nach einem der Ansprüche 1 bis 8, **dadurch gekennzeichnet, daß** es wiederholt wird und die jeweils ermittelten Kameraprojektionsparameter gemittelt werden.

**Claims**

1. Method for calibrating the image ($3_I$, $3_{II}$) of a camera (1), in particular a traffic monitoring camera, with respect to its viewing space, by determining the camera projection parameters ($m_{kl}$) of a camera projection of the viewing space onto the image, **characterized by** the steps of
   providing a movable support (4) with at least four markings visible by the camera (1), which span a volume and constitute known first world points ($w_i$) in the viewing space,
   capturing a first image ($3_I$) of the viewing space, translating the support (4) in the viewing space by an unknown displacement (v), to obtain, therefrom dependent, second world points ($w_i$) in the viewing space,
   capturing a second image ($3_{II}$) of the viewing space, detecting the markings in the first image ($3_I$) as first image points ($p_i$) and in the second image ($3_{II}$) as second image points ($p_i$), and
   determining the camera projection parameters ($m_{kl}$), by co-determining the displacement, from the known first world points, the second world points dependent from the displacement, the detected first image points and the detected second image points by means of the method of Direct Linear Transformation ("DLT").

2. Method according to claim 1, **characterized in that** the determining is carried out by solving the DLT equation

$$D(s,t) \cdot m = p$$

for *m, s* and *t*, with

D(s,t) DLT matrix of all world and image points, in which matrix the second world points are expressed by the first world points translated by the displacement (s,t,0),
*m* vector of the camera projection parameters, and
*p* vector of all world points.

3. Method according to claim 2, **characterized in that** for solving the DLT equation the minimisation problem

$$\|D(s,t) \cdot m - p\| \to \min$$

is solved by the Gauss Newton-algorithm.

4. Method according to any one of the claims 1 to 3, **characterized in that** at least four markings are detected in the one and at least three markings are detected in the other image.

5. Method according to any one of the claims 1 to 4, **characterized in that** more than two images ($3_I$, $3_{II}$) are captured to detect further image points ($p_i$) of the markings ($w_i$), which image points are included in the determining of the camera projection parameters ($m_{kl}$).

6. Method according to any one of the claims 1 to 5, **characterized in that** a vehicle is used as the support (4) and a travelling distance of the vehicle (4) is used as the displacement (v).

7. Method according to claim 6, **characterized in that** characteristic points of the vehicle (4) are used as markings.

8. Method according to claim 6, **characterized in that** illuminants on a rear rack as well as on a roof rack or rearview mirror support of the vehicle (4) are used as the markings ($w_i$).

9. Method according to any one of the claims 1 to 8, **characterized in that** it is repeated and the respectively determined camera projection parameters are averaged.

## Revendications

1. Procédé de calibrage d'une image ($3_I$, $3_{II}$) d'une caméra (1), notamment d'une caméra de surveillance de la circulation, par rapport à son espace de visée, en ce que les paramètres de projection de caméra ($m_{kl}$) d'une projection de caméra de l'espace de visée sur l'image sont déterminés, **caractérisé par** les étapes
de fourniture d'un support (4) mobile doté d'au moins quatre marqueurs visibles par la caméra (1) qui ouvrent un volume et forment des premiers points du monde ($w_i$) connus dans l'espace de visée,
de prise d'une première image ($3_I$) de l'espace de visée, de déplacement du support (4) dans l'espace de visée selon un décalage (v) inconnu afin d'obtenir des deuxièmes points du monde ($w_i$) dans l'espace de visée, quels deuxièmes points du monde dépendent dudit décalage,
de prise d'une deuxième image ($3_{II}$) de l'espace de visée, de détection des marqueurs dans la première image ($3_I$) en tant que premiers points d'image ($p_i$) et dans la deuxième image ($3_{II}$) en tant que deuxièmes points d'image ($p_i$), et de détermination des paramètres de projection de caméra ($m_{k1}$), avec la co-détermination du décalage, à partir des premiers points de monde connus, des deuxièmes points du monde dépendant du décalage, des premiers points d'image détectés et des deuxièmes points d'image détectés, à l'aide du Procédé de Transformation Linéaire Directe (« DLT »).

2. Procédé selon la revendication 1, **caractérisé en ce que** la détermination a lieu en résolvant l'équation DLT

$$D(s,t) \cdot m = p$$

par rapport à m, s et t, avec

> $D(s, t)$ étant la matrice DLT de tous les points du monde et d'image dans laquelle les deuxièmes points du monde sont exprimés par les premiers points du monde déplacés selon le décalage (s,t,0),
> $m$ étant le vecteur des paramètres de projection de la caméra, et
> $p$ étant le vecteur de tous les points d'image.

3.  Procédé selon la revendication 2, **caractérisé en ce que**, pour résoudre l'équation DLT, la minimisation

$$\|D(s,t) \cdot m - p\| \to \min$$

est résolue au moyen du procédé de Gauss-Newton.

4.  Procédé selon l'une des revendications 1 à 3, **caractérisé en ce qu'**au moins quatre marqueurs sont détectés dans l'une image et au moins trois marqueurs sont détectés dans l'autre image.

5.  Procédé selon l'une des revendications 1 à 4, **caractérisé en ce que** plus de deux images ($3_I$, $3_{II}$) sont prises afin de détecter d'autres points d'image ($p_i$) des marqueurs ($w_i$), lesquels sont impliqués dans la détermination des paramètres de projection de caméra ($m_{k1}$).

6.  Procédé selon l'une des revendications 1 à 5, **caractérisé en ce qu'**un véhicule est employé en tant que support (4) et qu'un trajet du véhicule (4) est employé en tant que décalage (v).

7.  Procédé selon la revendication 6, **caractérisé en ce que** des points marquants du véhicule (4) sont employés en tant que marqueurs.

8.  Procédé selon la revendication 6, **caractérisé en ce que** des systèmes d'éclairage sur un porte-charge arrière ainsi que sur une galerie de toit ou un support rétroviseur du véhicule (4) sont fixés en tant que marqueurs ($w_i$).

9.  Procédé selon l'une des revendications 1 à 8, **caractérisé en ce qu'**il est répété et que les paramètres de projection de caméra déjà déterminés sont moyennés.

*Fig. 1*

*Fig. 2b*

*Fig. 2a*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **ABDEL-AZIZ, Y.I. ; KARARA, H.M.** Direct Linear Transformation from Comparator Coordinates into Object Space Coordinates in Close-range Photogrammetry. *Proceedings of the Symposium on Close-Range Photogrammetry,* 1971, 1-18

- High-precision three-dimensional photogrametric calibration and object space reconstruction using a modified DLT-approach. **HATZE, H.** Journal of Biomechanics. Pergamon Press, 01. Januar 1988, vol. 21, 533-538